# EUROPEAN PATENT APPLICATION

(11) **EP 1 348 512 A1**
(43) Date of publication of application: **01.10.2003**
(21) Application number: 01993525.3
(22) Date of filing: 07.11.2001
(51) Int. Cl.: B23K 35/363

(54) **WATER-SOLUBLE FLUX COMPOSITION AND PROCESS FOR PRODUCING SOLDERED PART**

(30) Priority: 10.11.2000 JP 2000344257
(71) Applicant: Hitachi Chemical Company, Ltd., Tokyo 163-0449 (JP)
(72) Inventor: SAIKAWA, Tetsurou, Oyama-shi, Tochigi 323-0821 (JP); SUMI, Takeshi, Shimodate-shi, Ibaraki 308-0000 (JP); TAKASHOU, Sadao, Shimodate-shi, Ibaraki 308-0847 (JP)
(74) Representative: HOFFMANN - EITLE
(86) International application number: JP0109720
(87) International publication number: WO02038328

(57) **Abstract**

There are disclosed a water-soluble flux composition which comprises a water-soluble binder and an activating agent comprising at least one compound selected from the group consisting of a sulfonic acid compound, a sulfuric acid compound, a sulfamic acid compound, a multi-valent carboxylic acid compound and a persulfuric acid compound, and a process for producing an IC part or an electronic part which comprises the steps of coating the water-soluble flux composition on a terminal of the IC part or the electronic part and subsequently soldering the terminal.

## Description

### TECHNICAL FIELD

This invention relates to a water-soluble flux composition and a process for producing an IC part or an electronic part.

### BACKGROUND ART

When an electric part or an electronic part such as IC or diode, etc. is mounted on a printed wiring board and soldering is carried out for connection, a flux is used as a pre-treatment reagent for the purpose of removing an oxide film on the metal surface. As the flux, a large amount of a rosin type flux has been conventionally used. An effect of the flux is to remove oxides from a surface of a metal to which the electronic part is connected by soldering, to secure the connection between the metals and to increase a reliability of the connection. Therefore, it is required to wash the flux thoroughly so that a residual flux does not have an unfavorable effect on the connection reliability. As a method for washing, flon type solvent has been used, however, since flon has an environmental problem such as destruction of an ozone layer, a no-cleaning flux or a water-soluble flux has been favored. As a no-cleaning flux, a rosin type (mainly comprising ascorbic acid) is mainly used, however, it generates a large amount of VOC (Volatile Organic Compounds) in a working environment since it uses isopropyl alcohol as a solvent. From this point of view, a water-soluble flux that can be easily washed with water after soldering process has been sought for. For example, in Japanese Provisional Patent Publication No. 94995/1991, there is disclosed a water-soluble flux comprising an organic acid such as malic acid, tartaric acid, malonic acid, or ascorbic acid dissolved in or added to a lower glycol such as glycerin, ethylene glycol, isopropyl alcohol etc.

In a process for producing an IC part which is an insertion-type to be mounted on a printed wiring board, a semiconductor chip is mounted and connected on a copper frame having a predetermined shape and molded by a resin, and then, a copper lead portion is bent to give a product. Generally, this lead portion is used as a terminal of the part.

In the molding process, a surface of the bent lead portion is markedly oxidized since a considerable amount of heat is used in this process. In this state, even if the part is mounted on a printed wiring board and soldered, soldering cannot be performed satisfactorily, leading to non-wetting of the solder. Therefore, in the final process during the production of the IC part, etc., solder is coated on a lead portion in advance to give a product.

When a solder is coated on a lead portion of an IC part, an oxide film is initially removed, a pre-heating process at about 100°C is carried out to moderate a heat shock at a soldering temperature, and finally, soldering is carried out in a solder bath. Subsequently, cooling, washing with water, and drying process are carried out to give a product. However, in case that oxidation is significant on a lead portion, or depending on the kinds (Ni and so on) of a metal to be used in a lead frame, a good solderability is not achieved. In order to solve these problems, two methods are employed. Firstly, it is a method in which the lead portion is dipped into diluted sulfuric acid as a pre-treatment to remove an oxide film, and coating by water-soluble flux and soldering are carried out. In this case, flux may either contain no halogen or a low level of halogen, however, in a long course of time, a problem such that erosion of a device is caused by dilute sulfuric acid, or a problem associated with discarding of a used acid has arisen. The other method is to carry out soldering without a pre-treatment with dilute sulfuric acid, so that use of a flux with a high level of halogen (an amount of halogen: 5 to 15%) is indispensable for removing an oxide film on a lead portion of the IC part. However, also in this case, erosion of a product is caused due to a high level of halogen contained in the flux, and discarding used water after washing causes an environmental problem. In addition, it has been required a water-soluble flux that can be used without the pre-treatment with dilute sulfuric acid. However, the oxide film cannot be removed completely due to significant oxidation at a lead portion, causing unfavorable effects such as icicle, conductor bridge, non-wetting of a solder and roughened surface at the lead portion of the electronic part. Therefore, a good soldering cannot be provided.

Recently, responding to a request for environmental conservation, a movement to exclude a lead (Pb) component from the solder (a trend favoring a lead-free solder) has been more and more active, and a Pb-free solder has been commercially available which is obtained by removing Pb from the conventional Sn-Pb type solder, and selecting one or more elements from Bi, Cu, Ag, Zn and In. When this Pb-free solder is used, a good soldering cannot be provided with the conventional water-soluble flux, due to non-wetting property of the Pb-free solder.

As mentioned above, in case of carrying out a good soldering on a lead portion of an IC part that is significantly oxidized or on a lead frame made of a non-wetting type metal, it has been coped with by employing both the pre-treatment with dilute sulfuric acid and the water-soluble flux together, or by increasing a halogen content (5 to 15 % in an amount of halogen) in the flux when not using the pre-treatment with dilute sulfuric acid. However, this leads to a lowered quality of products and to an environmental problem.

Moreover, there has not yet been known any water-soluble flux composition that gives a good solderability when the Pb-free solder is used in accordance with a trend favoring a Pb-free solder.

An object of the present invention is to provide a water-soluble flux composition that does not require a pre-treatment using dilute sulfuric acid, contains no halogen as its component, and is well compatible with a various kinds of Pb-free solders as well as a conventional Pb-containing solder and to provide a process for producing a soldered part such as an electronic device and an IC part or an electronic part, using the same.

### SUMMARY OF THE INVENTION

The present invention relates to the followings.
1. A water-soluble flux composition which comprises a water-soluble binder and an activating agent comprising at least one compound selected from the group consisting of a sulfonic acid compound, a sulfuric acid compound, a sulfamic acid compound, a multi-valent carboxylic acid compound and a persulfuric acid compound.
2. The water-soluble flux composition according to section 1, wherein the water-soluble binder is contained in an amount of 50 to 99 % by weight, and the activating agent is contained in an amount of 1 to 50 % by weight, based on the total amount of the water-soluble flux composition
3. A process for producing an electronic device which comprises steps of coating the water-soluble flux composition according to section 1 or 2 on at least one terminal of an electronic part of the electronic device, and subsequently soldering the terminal by a solder when the electronic part is mounted on a printed wiring board.
4. A process for producing an IC part or an electronic part which comprises steps of coating the water-soluble flux composition according to section 1 or 2 on at least one terminal of the IC part or the electronic part and subsequently soldering the terminal by a solder.
5. The process for producing an IC part or an electronic part according to sections 4, wherein the solder contains no Pb.
6. The process for producing an IC part or an electronic part according to sections4, wherein the solder is a Sn-Cu solder.

### BEST MODE FOR CARRYING OUT THE INVENTION

In the present invention, as an activating agent, at least one compound selected from a group consisting of sulfonic acid compound, a sulfuric acid compound, a sulfamic acid compound, a multi-valent carboxylic acid compound and a persulfuric acid compound is used. Conventionally, as an activating agent, an inorganic acid, an organic acid, an amine and an amino acid and hydrochlorides thereof have generally been used. Among the inorganic acids, when sulfuric acid or hydrochloric acid is solely blended into a flux, problems arise such as erosion of a lead portion and disposal of a used flux. On the other hand, an activating agent of an organic acid or an amine has a low activating effect, and it is hard to remove an oxide film at a lead portion where deterioration caused by oxidation is significant. Further, when a hydrochloride of an amine is used as an activating agent, it is expected that a high level of halogen content results in problems relating erosion and disposal of a used acidic solution, and a low level of halogen content results in a problem such as poor solderability.

On the contrary, the activating agent of the present invention comprising at least one compound of a sulfonic acid compound, a sulfuric acid compound, a sulfamic acid compound, a multi-valent carboxylic acid compound and a persulfuric acid compound is able to solve the above problems such as erosion of parts or disposal of a used acidic acid, and so on.

As the sulfonic acid compound to be used in the present invention, examples may include paratoluenesulfonic acid, xylenesulfonic acid, o-aminobenzenesulfonic acid, metanilic acid, sulfanilic acid, o-phenolsulfonic acid, m-phenolsulfonic acid, p-phenolsulfonic acid, etc., and as the sulfamic acid compound, sulfamic acid, ammonium sulfamate, guanidine sulfamate, etc. are listed. As the sulfuric acid compound, a sulfate such as ammonium sulfate, etc. is listed, and as the persulfuric acid compound, a persulfate such as potassium persulfate, sodium persulfate, ammonium persulfate, etc. are listed. As the multi-valent carboxylic acid compound, a divalent carboxylic acid such as maleic acid, malonic acid, itaconic acid, fumaric acid and succinic acid, a trivalent carboxylic acid such as 1, 2, 3-propane tricarboxylic acid, etc. are listed.

To the flux composition of the present invention, a water-soluble binder is blended for the purpose of dispersing the above-mentioned activating agent uniformly.

As the water-soluble binder, at least one kind of compounds selected from the group consisting of a polyvinyl alcohol, a carboxy cellulose, a polyhydric alcohol, an aliphatic oxy-acid and an aromatic oxy-acid can be used.

As the polyhydric alcohol, a dihydric alcohol such as ethylene glycol, propylene glycol, etc., a trihydric alcohol such as glycerin, etc., a tetrahydric alcohol such as diglycerin, etc. are exemplified. Alkylene oxide addition products of polyols (especially those having a number average molecular weight of 200 to 2000; such as HK-11, (trade name, manufactured by Sanyo Kasei Kogyo Co., an ethylene oxide addition product of glycerin)), etc. are also exemplified.

As the aliphatic oxy-acid, glycolic acid, lactic acid, glyceric acid, malic acid, tartaric acid, citric acid, etc., and as the aromatic oxy-acid, salicylic acid, etc. are exemplified.

The water-soluble flux composition of the present invention contains the above-mentioned activating agent and the water-soluble binder as essential components, and as needs arise, a surfactant and the like may be blended. It is preferably dissolved in water or in a hydrophilic solvent and used.

An amount of the activating agent to be blended is preferably 1 to 50 % by weight, more preferably, 5 to 30 % by weight based on the total amount of the activating agent and the water-soluble binder. When the amount of the activating agent blended is less than 1 % by weight, it is getting harder to remove an oxide film at a lead portion of a part and wetting property of a solder is lowered. When the amount thereof exceeds 50 % by weight, activity is so strong that there is a possibility of considerable erosion at the lead portion.

On the other hand, an amount of the water-soluble binder to disperse the activating agent is preferably 50 to 99 % by weight and more preferably 70 to 95 % by weight based on the total amount of the activating agent and the water-soluble binder. When an amount of the water-soluble binder blended is less than 50 % by weight, the activating agent cannot be dispersed well and an activity is lowered, and possibly causing non-wetting of a solder or an icicle. When an amount of the water-soluble binder blended exceeds 99 % by weight, viscosity of the flux composition is elevated leading to poor workability, and moreover, resulting in a lower washing efficiency since a part or a device carrying a part is significantly soiled.

An amount of a solvent to be blended is preferably 10 to 80 % by weight, more preferably, 35 to 65 % by weight based on the total amount of the activating agent and the water-soluble binder. As a solvent, water, alcohol, etc. are exemplified. When an amount of the solvent blended is less than 10 % by weight, not only viscosity of the flux composition becomes large, causing a poor workability, but also washing efficiency is lowered since a part or a device carrying a part is significantly soiled. When an amount of the solvent blended exceeds 80 % by weight, activity of the flux composition itself is lowered, and wetting property of a solder is lowered.

Further, as the surfactant, examples include a polyoxyalkylene alkyl phenyl ether, such as polyethylene nonyl phenyl ether, etc., a polyoxyalkylene alkyl ether, such as polyethylene glycol alkyl phenyl ether (e.g., EA-130T, trade name, manufactured by Daiich Kogyo Kagaku Co.), polyethylene glycol alkyl ether, etc., polyethylene glycol fatty acid ester, etc. An amount of the surfactant blended is preferably 0.5 to 5 % by weight, and more preferably, 1 to 4 % by weight, based on the total amount of the activating agent and the water-soluble binder. When an amount of the surfactant is less than 0.5 % by weight, wetting property of the flux composition onto a part to be soldered is more likely to decrease, and when it exceeds 5 % by weight, foaming of the flux composition is significant and workability of soldering is more likely lowered.

The flux composition of the present invention is used for soldering metals themselves such as copper, nickel, iron, etc. Especially, it is used for soldering in order to electrically connect and secure a wiring substrate such as a printed wiring board and an IC part or an electronic part including IC, a transistor, a diode, a micro-switch, bobbin, etc. In this process, the flux composition of the present invention is coated on at least one of the parts to be attached. As a method for coating the flux composition and a method for soldering, the conventional methods can be utilized. For coating of the flux composition, a dip-coating, a wave-coating, a foam-coating, a spray-coating, and the like may be employed. For soldering, a dip-soldering method, a jet-soldering method, etc. may be used.

As a method for soldering, dip-soldering method is suitable and excellent in productivity by which many of parts to be soldered (terminals of parts) can be soldered simultaneously.

In the above, treatment by the flux composition of the present invention is carried out by dipping the parts in the flux composition kept at 10 to 50°C, or by brushing. In case of dipping, duration for dipping is preferably 5 to 120 seconds.

In addition, the flux composition of the present invention is used as a pre-treatment when soldering is carried out for lead portions of an IC part which can be obtained by mounting a semiconductor chip on a copper frame and molding them by a resin. The lead portion of the IC part originated from the copper frame is considerably oxidized in a process of resin molding. When this lead portion of the IC part is soldered, it is dipped in a flux bath kept at 10 to 50°C for 10 to 120 seconds to remove an oxide film. Subsequently, for the purpose of moderating a heat-shock in soldering process, the part is pre-heated for 1 to 4 minutes at 60 to 150°C, and then, soldering is carried out by dipping the part in a molten solder bath kept at 230 to 300°C for 10 to 120 seconds. And then, residual flux composition is removed by washing the IC part with water, or optionally with a detergent containing an organic solvent, followed by drying at 80 to 100°C to give an IC part of pin insertion type.

The flux composition of the present invention gives a good solderability not only for an eutectic crystal solder (lead-containing solder), but for a lead-free solder.

As the eutectic crystal solder (lead-containing solder), a Sn-Pb solder is generally used. As the lead-free solder, a Sn-Cu type solder, a Sn-Bi type solder, a Sn-Zn type solder, a Sn-Ag-Cu type solder, a Sn-Bi-Ag-Cu type solder, etc. are listed.

### EXAMPLES

In the following, the present invention is explained in more detail by referring to Examples, but the present invention is not limited by these Examples.

In the Examples below, halogen content in the flux composition was measured by a potentiometric titration method. The potentiometric titration method is carried out according to JIS Z3197, using an automatic titration device manufactured by Kyoto Denshi Kogyo, Co., Japan as a measuring device. Solder wettability was measured by Meniscograph method, using a soldergraph device (digital solder) manufactured by Tamura Seisakusho Co., and using a copper foil (TSTO foil 35 µm; trade name, manufactured by the Furukawa Electric Co. Ltd), under conditions for soldering temperature at 260 ± 5°C, a dipping depth of 1 mm, and dipping time of 0.5 seconds. With respect to the solder wettability, those with a value of less than 5.4 mN were judged as poor (X), those with a value of 5.4 mN or more are judged as excellent (0).

Solderability of lead portions of the IC part was evaluated as follows. Parts obtained by molding copper frames by an encapsulation material were used as test samples, and each of the test samples was dipped in various flux compositions shown in Table 1 or 2, respectively. Subsequently, they were soldered by 4 kinds of solders (Sn-37Pb, Sn-0.8Cu, Sn-3.5Ag-0.7Cu, and Sn-2Ag-2Bi-0.5Cu, wherein each number shows a blending ratio by weight according to JIS Z 3282, and the same applies to descriptions hereinafter. Incidentally, Sn-37Pb means a solder comprising 63% of Sn and 37% of Pb.), and then, wetting conditions thereof were observed. Solderability of the samples were judged as ○ for those exhibiting a good solderability, Δ for those having icicles and/or bridges, and × for those showing no solder wetting.

In addition, in heat resistance test, the IC parts were used which had been soldered by the above-prepared Sn-Cu type solder, and they were heated at 175°C for 3 hours. Then, the lead portions were coated with the rosin type flux followed by dipping in 3 kinds of solders (Sn-37Pb, Sn-3.5Ag-0.7Cu, and Sn-2Ag-2Bi-0.5Cu), respectively to observe solderability. Evaluations were made according to the above-described procedure.

### Examples 1 to 4

Water-soluble flux compositions containing no halogen were prepared according to the blending ratios shown in Table 1. And then, measurements were made on halogen contents, solder wettability by Meniscograph and solderability at IC lead portions for both at initial stage and after heat treatment. The results are shown in Table 1.

### Examples 5 to 8

Water-soluble flux compositions containing no halogen were prepared according to the blending ratios shown in Table 1. And then, measurements were made on halogen contents, solder wettability by Meniscograph and solderability at IC lead portions for both at initial stage and after heat treatment. The results are shown in Table 1.

### Examples 9 to 12

Water-soluble flux compositions containing no halogen were prepared according to the blending ratios shown in Table 1. And then, measurements were made on halogen contents, solder wettability by Meniscograph and solderability at IC lead portions for both at initial stage and after heat treatment. The results are shown in Table 1.

### Comparative Example 1

A water-soluble flux composition containing no halogen was prepared according to the blending ratio shown in Table 1. And then, measurements were made on halogen content, solder wettability by Meniscograph and solderability at IC lead portions for both at initial stage and after heat treatment. The results are shown in Table 1.

### Comparative Example 2

A water-soluble flux composition containing low level of halogen was prepared according to the blending ratio shown in Table 1. And then, measurements were made on halogen content, solder wettability by Meniscograph and solderability at IC lead portions for both at initial stage and after heat treatment. The results are shown in Table 1.

### Comparative Example 3

A water-soluble flux composition containing high level of halogen was prepared according to the blending ratio shown in Table 1. And then, measurements were made on halogen content, solder wettability by Meniscograph and solderability at IC lead portions for both at initial stage and after heat treatment. The results are shown in Table 1.

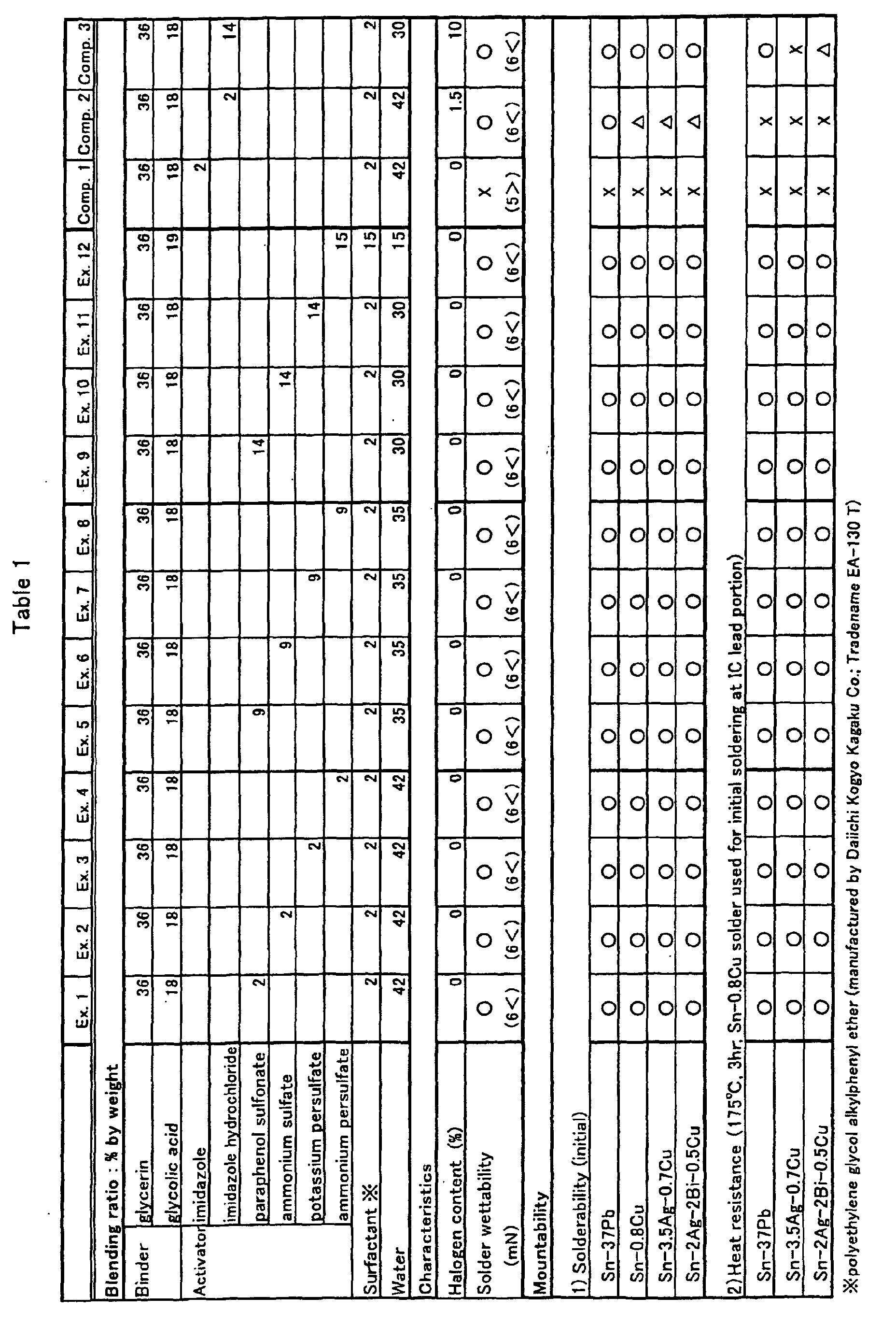

### Examples 13 to 16

Water-soluble flux compositions containing no halogen were prepared according to the blending ratios shown in Table 2. And then, measurements were made on halogen contents, solder wettability by Meniscograph and solderability at IC lead portions for both at initial stage and after heat treatment. The results are shown in Table 2.

### Examples 17 to 20

Water-soluble flux compositions containing no halogen were prepared according to the blending ratios shown in Table 2. And then, measurements were made on halogen contents, solder wettability by Meniscograph and solderability at IC lead portions for both at initial stage and after heat treatment. The results are shown in Table 2.

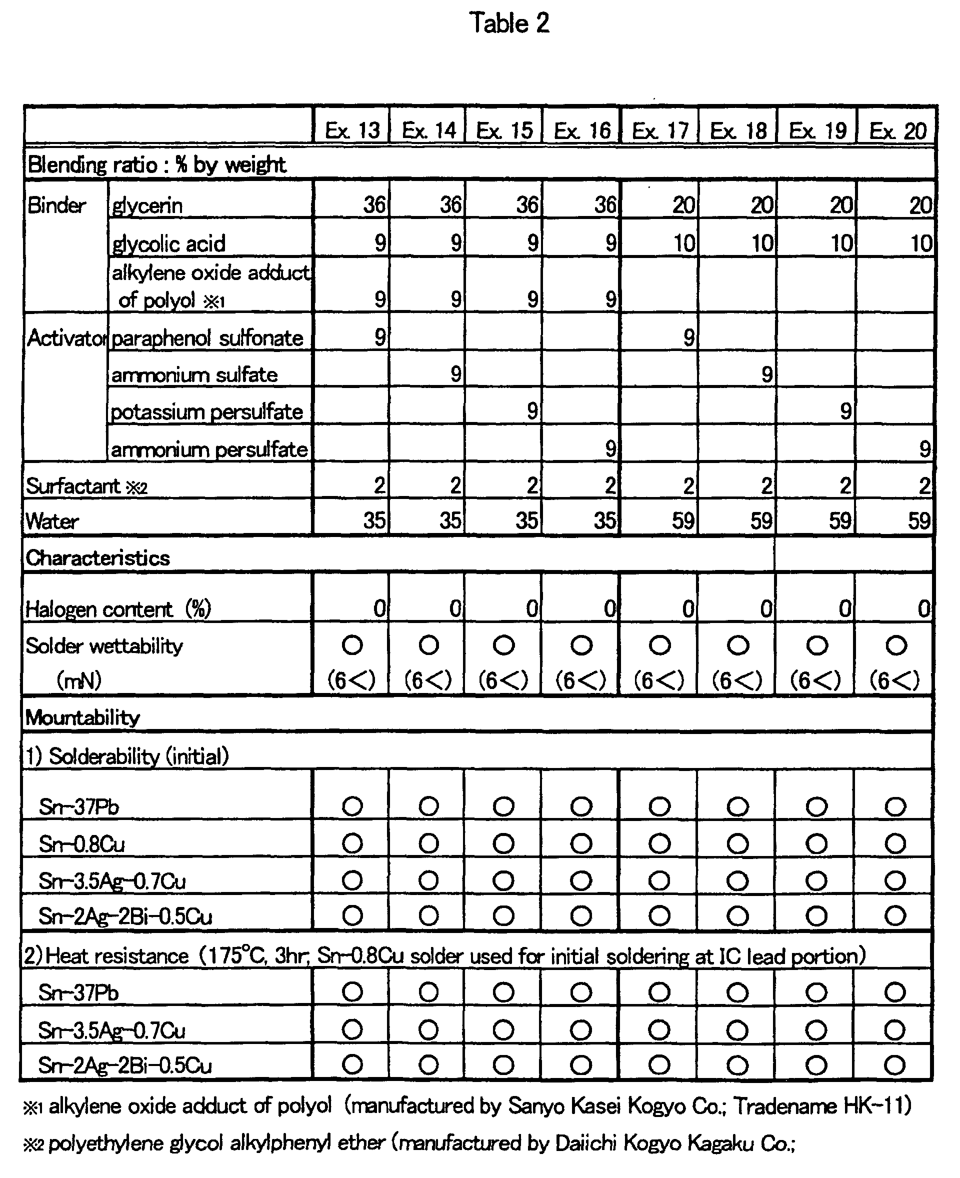

### Examples 21 to 28

Water-soluble flux compositions containing no halogen were prepared according to the blending ratios shown in Table 3. And then, measurements were made on halogen contents, solder wettability by Meniscograph and solderability at IC lead portions for both at initial stage and after heat treatment. The results are shown in Table 3.

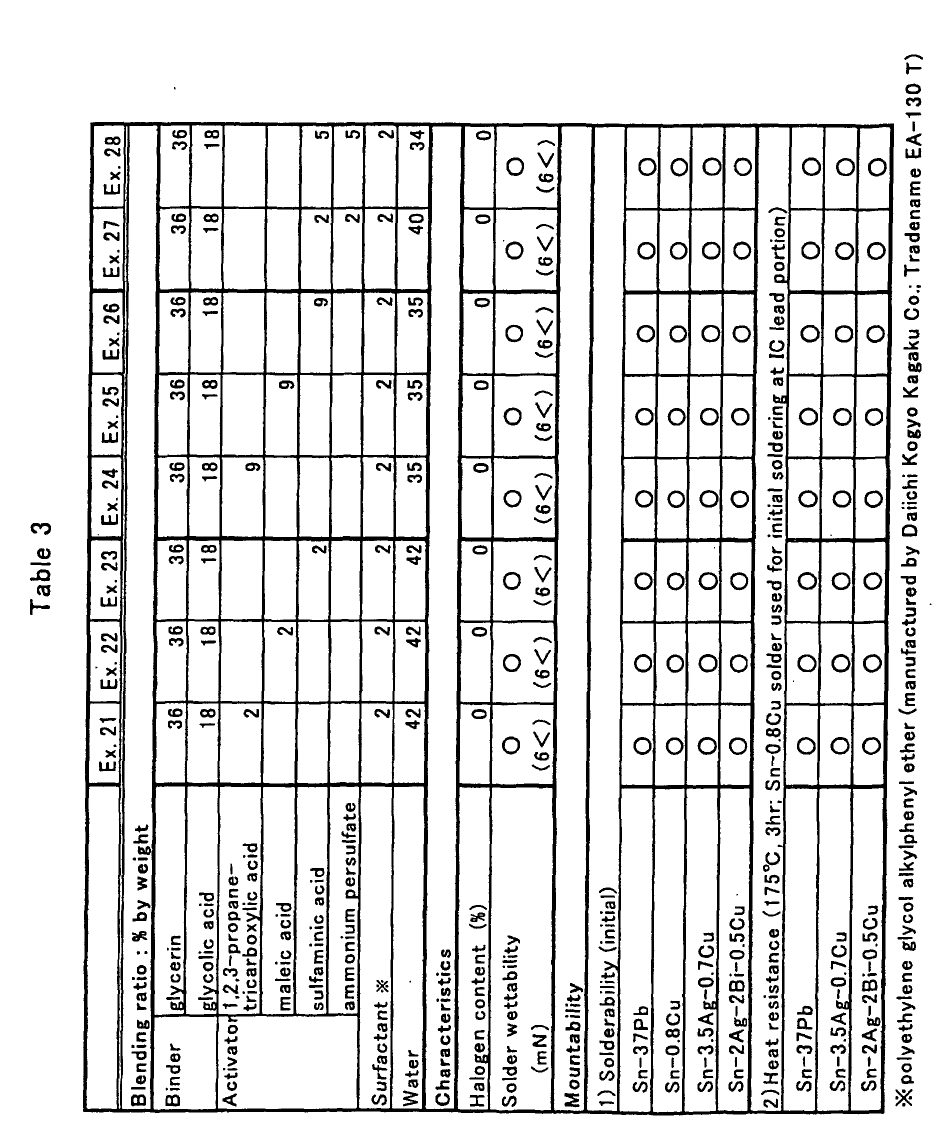

### INDUSTRIAL APPLICABILITY

The water-soluble flux composition of the present invention requires no halogen to be contained, and enables a good soldering to the lead portions of IC parts where oxidation takes place significantly, even without using dilute sulfuric acid for pre-treatment. Therefore, the present invention will improve quality of soldered parts such as IC parts, while meeting environmental requirements.

Moreover, it is shown that the water-soluble flux composition of the present invention can give a satisfactory solder wettability when it is used with a Pb-free solder, making it possible to use less Pb in a solder, in compliance with a trend of using a Pb-free solder.

## Claims

1. A water-soluble flux composition which comprises a water-soluble binder and an activating agent comprising at least one compound selected from the group consisting of a sulfonic acid compound, a sulfuric acid compound, a sulfamic acid compound, a multi-valent carboxylic acid compound and a persulfuric acid compound.

2. The water-soluble flux composition according to Claim 1, wherein the water-soluble binder is contained in an amount of 50 to 99 % by weight based on the total amount of the water-soluble flux composition.

3. The water-soluble flux composition according to Claim 1 or 2, wherein the activating agent is contained in an amount of 1 to 50 % by weight based on the total amount of the water-soluble flux composition.

4. A process for producing an electronic device which comprises the steps of coating the water-soluble flux composition according to any one of Claims 1 to 3 on at least one terminal of an electronic part of the electronic device, and subsequently soldering the terminal by a solder when the electronic part is mounted on a printed wiring board.

5. A process for producing an IC part or an electronic part which comprises the steps of coating the water-soluble flux composition according to any one of Claims 1 to 3 on at least one terminal of the IC part or the electronic part and subsequently soldering the terminal by a solder.

6. The process for producing an IC part or an electronic part according to Claim 5, wherein the solder contains no Pb.

7. The process for producing an IC part or an electronic part according to Claim 5, wherein the solder is a Sn-Cu solder.
